# EUROPEAN PATENT SPECIFICATION

(11) **EP 3 443 877 B1**
(45) Date of publication and mention of the grant of the patent: **10.03.2021**
(21) Application number: 17186562.9
(22) Date of filing: 17.08.2017
(51) Int. Cl.: A47J 31/54, A47J 31/46

(54) **A BEVERAGE MACHINE AND A METHOD FOR PRODUCING COFFEE-BASED BEVERAGES**
GETRÄNKEMASCHINE UND VERFAHREN ZUR HERSTELLUNG VON KAFFEEBASIERTEN GETRÄNKEN
DISTRIBUTEUR DE BOISSONS ET PROCÉDÉ POUR PRODUIRE DES BOISSONS À BASE DE CAFÉ

(43) Date of publication of application: 20.02.2019
(73) Proprietor: Eversys Holding SA, 3960 Sierre (CH)
(72) Inventor: LOCHER, Grégoire, 1976 Daillon (CH)
(74) Representative: Charrier Rapp & Liebau

(56) References cited:
- WO-A1-2016/034255
- US-A1- 2015 272 382
- US-A1- 2016 278 569
- US-A1- 2016 296 065

## Description

The invention relates to a beverage machine for producing coffee-based beverages according to the preamble of claim 1. The invention further relates to a method for producing coffee-based beverages in a beverage machine according to the preamble of claim 12.

Coffee-based beverages, as for example espresso, cappuccino, milk-coffee, white coffee or flavoured coffee blended with aromas, nowadays are very widespread and popular and are available in many different forms, in particular in terms of their starting blend and the way in which the beverage is extracted. Coffee machines for producing coffee-based beverages and methods for producing coffee-based beverages in a beverage machine are widely known in the prior art. In common coffee machines, hot water is passed through a layer of ground coffee (coffee powder) contained in a brewing chamber or an infusion container, as for example a metal filter. The water passing through the layer of ground coffee generally is heated to temperatures between 85°C to 110°C and is conducted under a certain pressure into the brewing chamber or the infusion container, in order to brew the ground coffee. The type of the coffee-based beverage produced and its blend and flavour highly depends on the temperature and pressure of the water directed through the ground coffee.

European patent application EP 2 314 183 A1, for example, is disclosing a coffee machine provided with a water pressure regulation and a method for controlling the pressure in the filter chamber of a coffee machine. The coffee machine disclosed, is comprising a hydraulic pump, at least one dispensing device comprising a filter unit, which is serving as a brewing chamber and is fillable with ground coffee, and a supply unit for supplying water to the filter unit. A hydraulic circuit brings the hydraulic pump into fluid communication with the supply unit of the dispensing device and the hydraulic circuit is comprising a supply duct which supplies hot water under pressure to the supply unit. The coffee machine is further comprising a system for controlling the dispensing pressure, which comprises a control unit, a pressure sensor disposed along the hydraulic circuit and apt to generate a control signal representative of the pressure detected, the pressure sensor being electronically connected to a control unit to detect the dispensing pressure, and a hydraulic variable-flow valve is disposed along the hydraulic circuit and apt to supply variable quantities of water to at least one dispensing device, the variable-flow valve being actuated by an electronic drive controlled electronically by the control unit in order to regulate the flow rate of water output as a function of a detected dispensing pressure value.

A beverage preparation apparatus and method is also disclosed by WO 2016/034255 A1.

The presentation of coffe-based beverages in disposable cups as "coffe-to-go" products is also very popular. Concerning the use of disposable cups, the market is more and more sensitive to pollution and customers request the usage of recyclable or bio-degradable cups, as for example PLA (polylactit acid) cup systems. PLA is a synthetic polymer compound based on corn and is completely bio-degradable. From PLA, cups can be produced by thermoforming. The use of this type of cup as containers for hot coffee, however, is raising problems, because the maximum authorised temperature of the contents is 50°C. At temperatures above 50°C, the PLA cups are melting. Therefore, a desire is existing to produce coffee-based beverages in coffee-machines which can be filled into PLA cups. Therefore, it is an object of the invention to produce coffee-based beverages, which can be filled into PLA cups.

A beverage device wherein a cooling down of fresh brewed coffee takes part before dispensing the coffee into a cup is disclosed by US 2015/0272382 A1.

Beverage dispensing devices comprising a brewing chamber, a boiler for supplying hot water, a duct connecting the boiler to the brewing chamber and means for supplying cold water to the duct of hot water are disclosed in US 2016/0296065 A1 and US 2016/0278569 A1.

It is an object of the invention to provide an alternative way producing coffee-based beverages having a temperature of 50°C or lower, when filled into a disposable cup made of a recyclable or bio-degradable material.

In some countries, the provision of water having drinking water quality is a problem. It is a further object of the invention to provide a beverage machine and a method to produce sterile coffee-based beverages with non-potable (impotable) water lacking drinking water quality.

In a further aspect of the invention, a beverage machine for producing coffee-based beverages shall be provided, wherein the machine is enabling to produce different kinds of beverages having different temperatures, as for example hot coffee, warm coffee or cold coffee.

The above referenced objects are solved with a beverage machine for producing coffee-based beverages, comprising the features of claim 1 and with a method for producing coffee-based beverages in a beverage machine, comprising the features of claim 12.

The beverage machine according to the invention is comprising a pump to supply pressurized water, a heater for heating the water supplied by the pump to a predefined heating temperature, a brewing chamber, which can be filled with coffee powder (ground coffee) and a piping being in fluid connection with the pump, the heater and the brewing chamber for conducting pressurized water into the brewing chamber, wherein the piping is comprising a first feed pipe between the pump and the heater and a second feed pipe between the heater and the brewing chamber and the second feed pipe is comprising at least a first valve, and a dispensing device for dispensing the coffee-based beverage produced in the brewing chamber by brewing the coffee powder with water supplied by the pump. In order to enable the feed of water having different temperatures into the brewing chamber, a cooler is arranged in the second feed pipe downstream of the first valve for cooling the water heated by the heater to a desired temperature, which is lower than the heating temperature.

According to the invention, the cooler of the beverage machine is a heat exchanger, which is thermally coupling the first feed pipe and the second feed pipe for cooling the heated water fed by the second feed pipe to the brewing chamber. This embodiment enables to supply the beverage machine with water lacking drinking water quality, since the water, which is fed into the brewing chamber, is sterilized by heating to temperatures above 60°C and the cold water having temperatures lower than 60°C comes not into contact with the brewing chamber.

The beverage machine according to the invention enables to brew the coffee powder with hot water or with cold water or with any desired water temperature between hot and cold. In particular, it is enabled to brew the coffee powder with hot water having temperatures between 85°C and 110°C, or with cold water having temperatures in the range of room temperature (e.g. around 20°C) or with any desired water temperature between room temperature and boiling temperature of water. Preferably, the natural water supplied by the pump is heated in the heater to temperatures above 60°C, to ensure that bacteria and viruses present in the supplied water are thermally killed. This enables to feed the beverage machine also with non-potable (impotable) water lacking drinking water quality, without any health risks for the consumer of the brewed beverage, because the brewed beverage is sterilized by heating the water to temperatures, which are high enough to kill viruses and bacteria.

The cooler preferably is cooling the heated water at least to a temperature which is sufficiently low, to ensure that the product temperature of the produced beverage is 50°C at maximum, in order to enable that the beverage can be poured in a PLA cup without melting the cup material. In any case, the cooler is cooling the heated water more than the ambient heat transfer will cool the heated water on its way from the heater to the brewing chamber.

The first valve arranged in the second feed pipe preferably is a switching valve (directional control valve), in particular a solenoid valve.

The beverage machine preferably comprises a bypass pipe, which is bypassing the heat exchanger, to feed heated water outgoing of the heater directly into the brewing chamber. This enables to feed the brewing chamber with hot water without cooling it, in particular with hot water in the temperature range of 85°C to 110°C, which is best suited for extracting the maximum flavour of the coffee powder.

For feeding hot water heated in the heater directly into the brewing chambera second valve in the form of a three-way valve can be arranged in the second feed pipe downstream of the first valve. Preferably, the second valve is a proportional valve. The input side of the second valve is connected by the second feed pipe with the heater and the first output side of the second valve is connected to the heat exchanger and the second output side of the second valve is connected to the bypass pipe, which is bypassing the heat exchanger. This enables to direct at least a part of the hot water heated in the heater without cooling it through the first output side of the second valve directly into the brewing chamber. The rest of the hot water heated in the heater can be directed through the second output side of the second valve into the heat exchanger, where the water is cooled by heat transfer with the cold water supplied by the first feed pipe to the heat exchanger. When the second valve is a proportional valve, the amount of water carried directly into the brewing chamber can be chosen by regulating the water flow through the first output side of the second valve.

In the beverage machine of the invention, a pressure sensor can be arranged in the first feed pipe, downstream of the pump, in order to measure the pressure of the water supplied by the pump into the first feed pipe.

Further at least one temperature sensor is preferably arranged in the second feed pipe, in order to measure the temperature of the water carried into the brewing chamber. A first temperature sensor may be arranged in the second feed pipe directly downstream of the heater for detecting the temperature of the outgoing water of the heater and/or a second temperature sensor preferably is arranged in the second feed pipe directly upstream of the brewing chamber for detecting the temperature of the water fed into the brewing chamber.

Also the dispensing device preferably is comprising an outlet pipe for discharging the beverage into a container, particularly a PLA cup. In order to avoid that the temperature of the beverage is higher than 50°C when a PLA cup is used, a third temperature sensor is arranged in the outlet pipe for determining the temperature of the beverage. The controlling system of the machine is stopping the discharge of the beverage, if the third sensor is sensing a beverage temperature higher than 50 °C.

Preferably a bypass pipe, which is bypassing the brewing chamber, is included in the piping system. This bypass pipe is connecting the second feed pipe with the outlet pipe and enables to mix the brewed coffee flowing out of the brewing chamber and into the outlet pipe with cold, warm or hot water, in order to modify the flavour profile of the produced coffee-based beverage. For closing and opening the bypass pipe, a bypass valve in the form of a switching valve is arranged in the bypass pipe. Further, a throttle valve may be arranged in the bypass pipe.

Another important parameter for defining a flavour profile of the coffee-based beverage produced with the machine according to the invention is the powder quantity that is filled in the brewing chamber. To be able to detect the powder quantity, the brewing chamber therefore appropriately is coupled with a portion sensor, in particular with a weighing sensor located at the bottom of the brewing chamber. Once a predefined powder quantity is reached upon filling coffee powder in the brewing chamber, the control system of the beverage machine will interrupt the (automatic) coffee powder filling.

In the method according to the invention, the following steps are (automatically) performed in a beverage machine:
- supplying pressurized water to a heater,
- heating the supplied water in the heater to temperatures of at least 60°C, preferably to more than 80°C,
- filling a brewing chamber with coffee powder,
- conducting the water heated in the heater into the brewing chamber filled with coffee powder for brewing the coffee powder, thereby producing the coffee-based beverage,
- dispensing the coffee-based beverage produced in the brewing chamber by a dispensing device,
wherein the water heated by the heater is cooled in a heat exchanger before the water is conducted into the brewing chamber, wherein the heat exchanger is thermally coupling a first feed pipe and a second feed pipe, wherein the first feed pipe is supplying the pressurized water to the heater and the second feed pipe is conducting the water heated in the heater into the brewing chamber.

Preferably, the water is heated in the heater to temperatures between 80°C and 110°C. The water heated by the heater is cooled in the heat exchanger to such an extent, that the temperature of the produced beverage is 50°C or lower. The temperature of the produced beverage may be sensed by a product temperature sensor arranged in the dispensing device, and dispensing of the coffee-based beverage is stopped, if this product temperature sensor is detecting a product temperature of more than 50°C.

Below, an embodiment of the invention is described in further detail with reference to the accompanying drawing, which shows:

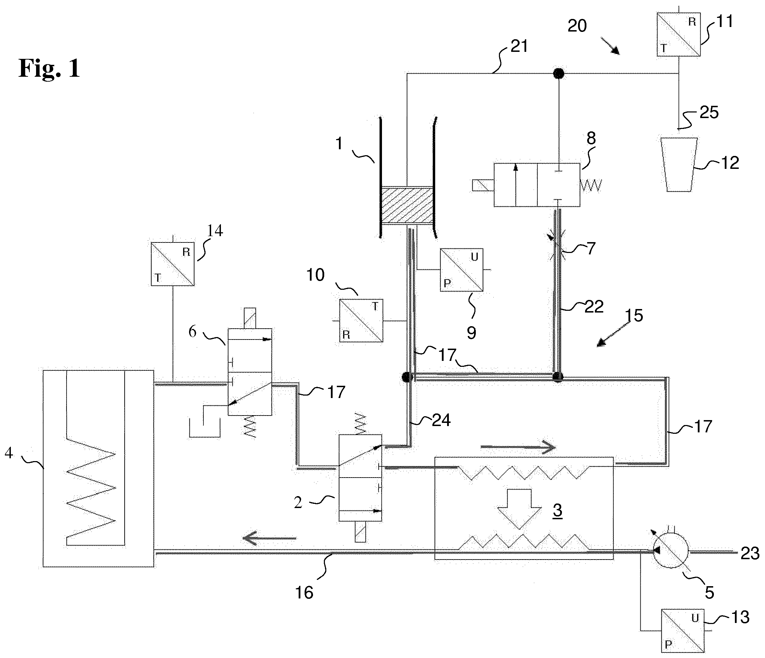

- **Fig. 1:**: a hydraulic circuit of a beverage machine according to the invention;

The embodiment of a beverage machine according to the invention shown in Figure 1 can be used with drinkable water or with water having no drinkable-water quality.

The hydraulic circuit shown in Figure 1 comprises a cold-water inlet 23 connected to a piping 15 with a first feed pipe 16, a second feed pipe 17, a pump 5 to supply pressurized water, a heater 4 for heating the water supplied by the pump 5, a brewing chamber 1, which is fillable with coffee powder, and a dispensing device 20 with an outlet pipe 21 having an outlet 25. One end of the first feed pipe 16 is connected to the cold-water inlet 23 via the pump 5 and the other end of the first feed pipe 16 is connected to the heater 4. The second feed pipe 17 is connecting the heater 4 and the brewing chamber 1. Thus the piping 15 is fluidly connecting the pump 5, the heater 4 and the brewing chamber 1 for conducting pressurized water into the brewing chamber 1. The second feed pipe 17 is including a first valve 6, which is a 3-port/2-way valve in the embodiment shown in Figure 1. The first valve 6 is a directional control valve, for example a solenoid valve.

For cooling the water heated in the heater 4 a heat exchanger 3, which is thermally coupling the first feed pipe 16 and the second feed pipe 17 is arranged in the embodiment of Figure 1. A primary side of the heat exchanger 3 is connected with the first feed pipe 16 and a secondary side of the heat exchanger 3 is connected with the second feed pipe 17. In the second feed pipe 17, upstream of the heat exchanger 3 and downstream of the first valve 6, a second valve 2 is arranged. The second valve 6 is a 3-port/2-way valve and can be a directional control valve or a proportional valve.

Directly downstream of the heater 4, a first temperature sensor 14 is arranged in the second feed pipe 17for detecting the temperature of the outgoing water of the heater 4. A second temperature sensor 10 is arranged in the second feed pipe 17 directly upstream of the brewing chamber 1 for detecting the temperature of the water fed into the brewing chamber 1. The brewing chamber 1 is coupled with a portion sensor 9, which is determining the amount of coffee powder filled in the brewing chamber 1. A third temperature sensor 11 is arranged in the outlet pipe 21 for determining the temperature of the beverage.

A bypass pipe 22 is bypassing the brewing chamber 1 and is connecting the second feed pipe 17 with the outlet pipe 21. In the bypass pipe 22, a throttle valve 7 and a bypass valve 8 are arranged.

A further bypass pipe 24 is arranged in the circuit of the embodiment for connecting an outlet of the second valve 2 with the second feed pipe 17 under bypassing the heat exchanger 3. With this further bypass pipe 24, water outgoing of the heater 4 can be fed directly into the brewing chamber 1, without cooling the heated water, when the further bypass pipe 24 is opened by the second valve 2.

The beverage machine shown in Figure 1 is electronically controlled by a control system, which is programmed to control the machine as follows:
The cold-water inlet 23 is providing cold water, which can be non-potable (impotable) water. The control system is driving the speed of the pump 5 in order to create an adjustable water pressure. The diagram Temperature / Pressure is related to the desired flavour of the produced beverage. The pump 5 is supporting the cold water from the cold-water inlet 23 under the predefined pressure into the first feed pipe 16 and into the primary side of the heat exchanger 3. Downstream of the heat exchanger 3, the cold water goes inside the heater 4. In the heater 4, the water will be heated to the programmed heating temperature, which is at least 60°C and preferably is between 85 and 110°C (corresponding to the standard needed for brewing a coffee beverage). The first temperature sensor 14 detects the heating temperature of the water and the control system is controlling the power of the heater 4 to hold the temperature of the water heated in the heater 4 to the predefined temperature value. By heating the water in the heater to temperatures above 60°C, viruses and bacteria present in the (non-potable) water are killed. The heated and thus sterilized water then can be used for brewing beverages with hot, cold or warm water, depending of the customer's choice, as explained below.

Downstream of the heater 4, the first valve 6, when opened, and the second valve 2 allows the heated water to flow directly into the brewing chamber 1 and going through the coffee powder for brewing it. The brewed coffee is flowing out of the brewing chamber 1 and into the outlet pipe 21 of the dispensing device 20. The dispensing device 20 is then discharging the brewed coffee beverage into a cup 12 standing underneath the outlet 24 of the dispensing device 20.

In a first mode of operation, a hot coffee beverage is produced, by directing the heated water outgoing from the heater 4 by the second valve 2 into the bypass pipe 24, which is bypassing the heat exchanger 3. From the bypass pipe 24, the hot water is flowing directly into the brewing chamber 1, without being cooled.

The second temperature sensor 10 is detecting the water temperature coming inside the coffee powder and transfers this information to the control system, which monitors also the water temperature inside the heater 4 using the first temperature sensor 14. The control system is controlling the power of the heater 4, in order to maintain the programmed heating temperature.

In a second mode of operation, the second valve 2 directs the heated water coming from the heater 4 into the secondary side of the heat exchanger 3. In the heat exchanger 3, the heated water outgoing of the heater 4 is cooled by thermal transfer with the cold water supplied by the first feed pipe 16 and flowing through the primary side of the heat exchanger 3. The heated water is cooled in the heat exchanger 3 to temperatures in the range of 20°C to 60°C, preferably below 50°C. Downstream of the heat exchanger 3, the cooled water is directed into the brewing chamber 1, to produce a cold coffee beverage, having a product temperature at the outlet 25, which in either case is below 50°C. The brewed beverage finally is poured into the cup 12, which then can be a PLA cup.

In each mode of operation, the brewed coffee is poured in the cup 12. Supplementary hot or warm clear water can be poured through the bypass pipe 22 into the cup 12, when the bypass valve 8 is opened, in order to modify the flavour profile of the produced beverage. The amount of the clear water poured into the cup 12 through the bypass pipe 22 can be selected by the throttle valve 7. When the second valve 2 is directing the hot water directly into the bypass pipe 24 and from there into the bypass pipe 22, the hot water is not cooled, since the heat exchanger 3 is bypassed. In this case, hot water is poured into the cup, in addition to the coffee flowing out of the brewing chamber 1 and the outlet pipe 21. When the second valve 2 is directing the hot water into the heat exchanger 3 and downstream of the heat exchanger 3 into the bypass pipe 22, the hot water is cooled in the heat exchanger 3 and is streaming as warm water into the cup 12. The third temperature sensor 11 measures the temperature of the beverage poured in the cup 12. This temperature information of the third temperature sensor 11 is processed by the control system and depending on the flavour profile definition, the amount of water coming from the bypass 22 can be adjusted by the throttle valve 7. In every case, when the cup 12 is a PLA cup, the control system is stopping the discharge of beverage by the dispensing device 20, when the third temperature sensor 11 measures a temperature of the produced beverage of higher than 50°C.

## Claims

1. A beverage machine for producing coffee-based beverages comprising
- a pump (5) to supply pressurized water,
- a heater (4) for heating the water supplied by the pump (5),
- a brewing chamber (1), which is fillable with coffee powder,
- a piping (15) being in fluid connection with the pump (5), the heater (4) and the brewing chamber (1) for conducting pressurized water into the brewing chamber (1), the piping (15) is comprising a first feed pipe (16) between the pump (5) and the heater (4) and a second feed pipe (17) between the heater (4) and the brewing chamber (1), wherein the second feed pipe (17) is comprising at least a first valve (6),
- a dispensing device (20) for dispensing the coffee-based beverage produced in the brewing chamber (1) by brewing the coffee powder with water supplied by the pump (5),
wherein a cooler is arranged in the second feed pipe (17) downstream of the first valve (6) for cooling the water heated by the heater (4), **characterized in that** the cooler is a heat exchanger (3), which is thermally coupling the first feed pipe (16) and the second feed pipe (17) for cooling the heated water fed by the second feed pipe (17) to the brewing chamber (1).

2. A beverage machine according to claim 1, wherein a bypass pipe (24) is bypassing the heat exchanger (3) to feed heated water outgoing of the heater (4) into the brewing chamber (1).

3. A beverage machine according to claim 1 or 2, wherein a second valve (2) is arranged in the second feed pipe (17) downstream of the first valve (6).

4. A beverage machine according to claim 3, wherein the first valve (6) is a switching valve, in particular a solenoid valve and/or the second valve (2) is a switching valve, in particular a solenoid valve, or a variable-flow valve, in particular a proportional valve.

5. A beverage machine according to one of the preceding claims, wherein a pressure sensor (13) is arranged in the first feed pipe (16).

6. A beverage machine according to one of the preceding claims, wherein a first temperature sensor (14) is arranged in the second feed pipe (17) directly downstream of the heater (4) for detecting the temperature of the outgoing water of the heater (4) and/or a second temperature sensor (10) is arranged in the second feed pipe (17) directly upstream of the brewing chamber (1) for detecting the temperature of the water fed into the brewing chamber (1).

7. A beverage machine according to one of the preceding claims, wherein the brewing chamber (1) is coupled with a portion sensor (9) which is determining the amount of coffee powder filled in the brewing chamber (1).

8. A beverage machine according to one of the preceding claims, wherein the dispensing device (20) is comprising an outlet pipe (21) for discharging the beverage into a container, preferably a cup (12).

9. A beverage machine according to claim 8, wherein a third temperature sensor (11) is arranged in the outlet pipe (21) for determining the temperature of the beverage.

10. A beverage machine according to claim 8 or 9, wherein a bypass pipe (22) is bypassing the brewing chamber (1) and is connecting the second feed pipe (17) with the outlet pipe (21).

11. A beverage machine according to claim 10, wherein a throttle valve (7) and/or a bypass valve (8) is arranged in the bypass pipe (22).

12. A method for producing coffee-based beverages in a beverage machine according to one of the preceding claims 1-11, comprising the following steps:
- supplying pressurized water to a heater (4),
- heating the supplied water in the heater (4) to temperatures of at least 60°C, preferably to more than 80°C,
- filling a brewing chamber (1) with coffee powder,
- conducting the water heated in the heater (4) into the brewing chamber (1) filled with coffee powder for brewing the coffee powder, thereby producing the coffee-based beverage,
- dispensing the coffee-based beverage produced in the brewing chamber (1) by a dispensing device (20),
**characterized in that** the water heated by the heater (4) is cooled in a heat exchanger (3) before the water is conducted into the brewing chamber (1), wherein the heat exchanger (3) is thermally coupling a first feed pipe (16) and a second feed pipe (17), wherein the first feed pipe (16) is supplying the pressurized water to the heater (4) and the second feed pipe (17) is conducting the water heated in the heater (4) into the brewing chamber (1).

## Patentansprüche

1. Getränkemaschine zur Erzeugung von kaffeehaltigen Getränken, umfassend
- eine Pumpe (5) zur Bereitstellung von druckbeaufschlagtem Wasser,
- einen Erhitzer (4) zur Erhitzung des von der Pumpe (5) bereitgestellten Wassers,
- eine Brühkammer (1), die mit Kaffeepulver befüllbar ist,
- ein Leitungssystem (15) in fluidischer Verbindung mit der Pumpe (5), dem Erhitzer (4) und der Brühkammer (1) zur Leitung des unter Druck stehenden Wassers in die Brühkammer (1), wobei das Leitungssystem (15) eine erste Zufuhrleitung (16) zwischen der Pumpe (5) und dem Erhitzer (4) und eine zweite Zufuhrleitung (17) zwischen dem Erhitzer (4) und der Brühkammer (1) umfasst, und die zweite Zufuhrleitung (17) mindestens ein erstes Ventil (6) enthält,
- eine Ausgabeanordnung (20) zur Ausgabe des durch Aufbrühen des Kaffeepulvers mit dem von der Pumpe (5) bereitgestellten Wasser in der Brühkammer (1) erzeugten kaffeehaltigen Getränks,
wobei ein Kühler in der zweiten Zufuhrleitung (17) stromabwärts des ersten Ventils (6) zur Kühlung des vom Erhitzer (4) erhitzten Wassers angeordnet ist, **dadurch gekennzeichnet, dass** der Kühler ein Wärmetauscher (3) ist, der die erste Zufuhrleitung (16) und die zweite Zufuhrleitung (17) thermisch koppelt, um das erhitzte Wasser, das der Brühkammer (1) durch die zweite Zufuhrleitung (17) zugeführt wird, zu kühlen.

2. Getränkemaschine nach Anspruch 1, wobei eine Bypassleitung (24) den Wärmetauscher (3) umgeht, um der Brühkammer (1) erhitztes Wasser, das den Erhitzer (4) verlässt, zuzuführen.

3. Getränkemaschine nach Anspruch 1 oder 2, wobei ein zweites Ventil (2) in der zweiten Zufuhrleitung (17) stromabwärts des ersten Ventils (6) angeordnet ist.

4. Getränkemaschine nach Anspruch 3, wobei das erste Ventil (6) ein Umschaltventil, insbesondere ein Magnetventil ist und/oder das zweite Ventil (2) ein Umschaltventil, insbesondere ein Magnetventil, oder ein Durchflusssteuerventil, insbesondere ein Proportionalventil ist.

5. Getränkemaschine nach einem der voranstehenden Ansprüche, wobei ein Drucksensor (13) in der ersten Zufuhrleitung (16) angeordnet ist.

6. Getränkemaschine nach einem der voranstehenden Ansprüche, wobei ein erster Temperatursensor (14) in der zweiten Zufuhrleitung (17) unmittelbar stromabwärts des Erhitzers (4) zur Erfassung der Temperatur des den Erhitzer verlassenden Wassers angeordnet ist, und/oder ein zweiter Temperatursensor (10) in der zweiten Zufuhrleitung (17) unmittelbar stromaufwärts der Brühkammer (1) zur Erfassung der Temperatur des der Brühkammer (1) zugeführten Wassers angeordnet ist.

7. Getränkemaschine nach einem der voranstehenden Ansprüche, wobei die Brühkammer (1) mit einem Portionssensor (9) gekoppelt ist, der die Menge von Kaffeepulver erfasst, das in die Brühkammer (1) gefüllt ist.

8. Getränkemaschine nach einem der voranstehenden Ansprüche, wobei die Ausgabeanordnung (20) eine Auslassleitung (21) zur Ausgabe des Getränks in einen Behälter, bevorzugt eine Tasse (12), enthält.

9. Getränkemaschine nach Anspruch 8, wobei ein dritter Temperatursensor (11) in der Auslassleitung (21) zur Erfassung der Temperatur des Getränks angeordnet ist.

10. Getränkemaschine nach Anspruch 8 oder 9, wobei eine Bypassleitung (22) die Brühlammer (1) umgeht und die zweite Zufuhrleitung (17) mit der Auslassleitung (21) verbindet.

11. Getränkemaschine nach Anspruch 10, wobei in der Bypassleitung (22 ein Drosselventil (7) und/oder ein Bypassventil (8) angeordnet ist.

12. Verfahren zur Erzeugung von kaffeehaltigen Getränken in einer Getränkemaschine nach einem der voranstehenden Ansprüche 1 bis 11, umfassend die folgenden Schritte:
- Zuführung von unter Druck stehendem Wasser zu einem Erhitzer (4),
- Erhitzen des zugeführten Wassers in dem Erhitzer (4) auf eine Temperatur von mindestens 60°C, bevorzugt von mehr als 80°C,
- Füllen einer Brühkammer (1) mit Kaffeepulver,
- Leiten des in dem Erhitzer (4) erhitzten Wassers in die mit Kaffeepulver befüllte Brühkammer (1), um das Kaffeepulver aufzubrühen und dadurch das kaffeehaltige Getränk zu erzeugen,
- Ausgabe des in der Brühlammer (1) erzeugten kaffeehaltigen Getränks durch eine Ausgabeanordnung (20),
**dadurch gekennzeichnet, dass** das vom Erhitzer (4) erhitzte Wasser in einem Wärmetauscher (3) gekühlt wird, bevor das Wasser in die Brühlammer (1) geleitet wird, wobei der Wärmetauscher (3) eine erste Zufuhrleitung (16) und eine zweite Zufuhrleitung (17) thermisch miteinander koppelt, und wobei die erste Zufuhrleitung (16) das unter Druck stehende Wasser dem Erhitzer (4) zuführt und die zweite Zufuhrleitung (17) das im Erhitzer (4) erhitzte Wasser in die Brühkammer (1) leitet.

## Revendications

1. Distributeur de boisson destiné à produire des boissons à base de café, comprenant :
une pompe (5) destinée à délivrer de l'eau sous pression,
un dispositif de chauffage (4) destiné à chauffer l'eau délivrée par la pompe (5),
un compartiment d'infusion (1), qui peut être rempli de café en poudre,
une tuyauterie (15) qui est en communication fluidique avec la pompe (5), le dispositif de chauffage (4) et le compartiment d'infusion (1) afin d'amener de l'eau sous pression dans le compartiment d'infusion (1), la tuyauterie (15) comprenant une première tuyauterie d'alimentation (16) entre la pompe (5) et le dispositif de chauffage (4) et une seconde tuyauterie d'alimentation (17) entre le dispositif de chauffage (4) et le compartiment d'infusion (1), dans lequel la seconde tuyauterie d'alimentation (17) comprend au moins une première vanne (6),
un dispositif de distribution (20) destiné à distribuer la boisson à base de café produite dans le compartiment d'infusion (1) par infusion du café en poudre dans de l'eau délivrée par la pompe (5),
dans lequel un dispositif de refroidissement est agencé dans la seconde tuyauterie d'alimentation (17) en aval de la première vanne (6) afin de refroidir l'eau chauffée par le dispositif de chauffage (4), **caractérisé en ce que** le dispositif de refroidissement est un échangeur thermique (3), qui est couplé thermiquement à la première tuyauterie d'alimentation (16) et la seconde tuyauterie d'alimentation (17) afin de refroidir l'eau chauffée délivrée par la seconde tuyauterie d'alimentation (17) au compartiment d'infusion (1).

2. Distributeur de boisson selon la revendication 1, dans lequel une tuyauterie de contournement (24) contourne l'échangeur thermique (3) afin de délivrer l'eau chauffée sortant du dispositif de chauffage (4) dans le compartiment d'infusion (1).

3. Distributeur de boisson selon la revendication 1 ou 2, dans lequel une seconde vanne (2) est agencée dans la seconde tuyauterie d'alimentation (17), en aval de la première vanne (6).

4. Distributeur de boisson selon la revendication 3, dans lequel la première vanne (6) est une vanne de commutation, en particulier, une électrovanne et/ou la seconde vanne (2) est une vanne de commutation, en particulier, une électrovanne ou une vanne à débit variable, en particulier, une vanne proportionnelle.

5. Distributeur de boisson selon l'une des revendications précédentes, dans lequel un capteur de pression (13) est agencé dans la première tuyauterie d'alimentation (16).

6. Distributeur de boisson selon l'une des revendications précédentes, dans lequel un premier capteur de température (14) est agencé sur la seconde tuyauterie d'alimentation (17) directement en aval du dispositif de chauffage (4) afin de détecter la température de l'eau sortant du dispositif de chauffage (4) et/ou un deuxième capteur de température (10) est agencé sur la seconde tuyauterie d'alimentation (17) directement en amont du compartiment d'infusion (1) afin de détecter la température de l'eau délivrée par le compartiment d'infusion (1).

7. Distributeur de boisson selon l'une des revendications précédentes, dans lequel le compartiment d'infusion (1) est couplé à un capteur de portion (9) qui détermine la quantité de café en poudre présente dans le compartiment d'infusion (1).

8. Distributeur de boisson selon l'une des revendications précédentes, dans lequel le dispositif de distribution (20) comprend une tuyauterie de sortie (21) afin de décharger la boisson dans un conteneur, de préférence, une tasse (12).

9. Distributeur de boisson selon la revendication 8, dans lequel un troisième capteur de température (11) est agencé sur la tuyauterie de sortie (21) afin de déterminer la température de la boisson.

10. Distributeur de boisson selon la revendication 8 ou 9, dans lequel une tuyauterie de contournement (22) contourne le compartiment d'infusion (1) et est raccordée à la seconde tuyauterie d'alimentation (17) avec la tuyauterie de sortie (21).

11. Distributeur de boisson selon la revendication 10, dans lequel une vanne réglable (7) et/ou une vanne de contournement (8) est agencée sur la tuyauterie de contournement (22).

12. Procédé destiné à produire des boissons à base de café dans un distributeur de boisson selon l'une des revendications 1 à 11 précédentes,
comprenant les étapes suivantes :
d'alimentation d'un dispositif de chauffage (4) en eau sous pression,
de chauffage de l'eau délivrée dans le dispositif de chauffage (4) à une température d'au moins 60°C, de préférence, supérieure à 80°C,
de remplissage d'un compartiment d'infusion (1) avec du café en poudre,
d'acheminement de l'eau chauffée dans le dispositif de chauffage (4) vers le compartiment d'infusion (1) rempli de café en poudre afin de faire infuser le café en poudre, produisant ainsi la boisson à base de café,
de distribution de la boisson à base de café produite dans le compartiment d'infusion (1) par un dispositif de distribution (20),
**caractérisé en ce que** l'eau chauffée par le dispositif de chauffage (4) est refroidie dans un échangeur thermique (3) avant que l'eau soit acheminée dans le compartiment d'infusion (1), dans lequel l'échangeur thermique (3) couple thermiquement une première tuyauterie d'alimentation (16) et une seconde tuyauterie d'alimentation (17), dans lequel la première tuyauterie d'alimentation (16) délivre de l'eau sous pression au dispositif de chauffage (4) et la seconde tuyauterie d'alimentation (17) achemine l'eau chauffée dans le dispositif de chauffage (4) vers le compartiment d'infusion (1).
